Europäisches Patentamt

European Patent Office

Office européen des brevets

(11) Veröffentlichungsnummer: **0 305 559**
**A1**

## (12) EUROPÄISCHE PATENTANMELDUNG

(21) Anmeldenummer: 87112696.7

(22) Anmeldetag: 31.08.87

(51) Int. Cl.4: **B29C 63/04 , B27D 5/00**

(43) Veröffentlichungstag der Anmeldung:
08.03.89 Patentblatt 89/10

(84) Benannte Vertragsstaaten:
**AT DE ES IT**

(71) Anmelder: **HOMAG Maschinenbau AG**
**Schopfloch b.**
**D-7294 Freudenstadt(DE)**

(72) Erfinder: **Kalmbach, Kurt**
**Hölderlinstrasse 1**
**D-7291 Glatten(DE)**
Erfinder: **Zähringer, Günter**
**Am Balmen 8**
**D-7294 Schopfloch(DE)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) Andruckvorrichtung für im Durchlauf arbeitende Kantenanleim-, Postforming- oder Ummantelungsmaschinen.

(57) Um eine Andruckvorrichtung für im Durchlauf arbeitende Kantenanleim-, Postforming- oder Ummantelungsmaschinen, zum Anpressen von Oberflächenbeschichtungsmaterial auf ein hinsichtlich der Form vorgefrästes Trägermaterial, welche mit einer Anzahl von in Durchlaufrichtung jeweils versetzt hintereinander angeordneten, gestaffelt auf das Oberflächenmaterial einwirkenden und diese kontinuierlich an die vorgefräste Form des Trägermaterials anpressenden, unter Federkraft stehenden Druckrollen (1) ausgestattet ist, derart weiterzubilden, daß möglichst viele verschiedene Kanten- bzw. Profilformen mit ein und derselben Andruckvorrichtung, d.h. ohne Rüstseiten, bearbeitet werden können, werden die Druckrollen (1) derart gestaltet bzw. aufgehängt, daß sie sowohl in Andruckrichtung als auch in Achsrichtung in Grenzen gegenüber dem Trägermaterial bewegbar sind.

Fig. 4

# Andruckvorrichtung für im Durchlauf arbeitende Kantenanleim-, Postforming- oder Ummantelungsmaschinen

Die vorliegende Erfindung betrifft eine Andruckvorrichtung für im Durchlauf arbeitende Kantenanleim-, Postforming-oder Ummantelungsmaschinen, zum Anpressen von Oberflächenbeschichtungsmaterial auf ein hinsichtlich der Form vorgefrästes Trägermaterial nach dem Durchfahren einer Beleimungsstation, mit einer Anzahl von in Durchlaufrichtung jeweils versetzt hintereinander angeordneten, gestaffelt auf das Oberflächenmaterial einwirkenden und dieses kontinuierlich an die vorgefräste Form des Trägermaterials anpressenden, unter Federkraft stehenden Druckrollen, die einen Mantel aus elastischem Material aufweisen.

Eine kommissionsweise Fertigung auf Kantenanleim-, Postforming- oder Ummantelungsmaschinen ist nur dann wirtschaftlich möglich, wenn die für die Bearbeitung des jeweiligen Trägermaterials notwendigen Aggregate ohne nennenswerte Rüstzeiten in ihre Einsatzposition gebracht werden können.

Bei Kapp-, Fräs- oder anderen Bearbeitungsaggregaten für Kantenanleim- und Postformingmaschinen wird dieses Problem dadurch gelöst, daß alle für die Bearbeitung notwendigen Aggregate hintereinander am Durchlaufweg des Trägermaterials aufgereiht werden, so daß für den Fall der Umstellung auf ein anderes Träger- oder Beschichtsmaterial,bzw. eine andere Kanten- oder Profilform nur noch ein Zustellen bzw. Abrücken oder gegebenenfalls ein geringfügiges Verstellen notwendig wird. Große Rüstzeiten werden dadurch vermieden. Allerdings muß dieser Vorteil durch eine relativ große Maschinenlänge erkauft werden.

Ein Problem bei der kommissionsweisen Fertigung an Maschinen der eingangs beschriebenen Art stellen die Andruckvorrichtungen, die sogenannten Druckzonen dar. Diese müssen in Durchlaufrichtung des Trägermaterials stets dicht hinter der Beleimungsstation angeordnet werden, damit nach dem Leimauftrag unmittelbar ein Anpressen des Oberflächenbeschichtungsmaterials durch die Andruckvorrichtung erfolgen kann. Ein hintereinander Aufreihen von verschiedenen Andruckvorrichtungen für verschiedene Werkstücke, die jeweils einzeln im Bedarfsfalle zugestellt bzw. abgerückt werden, verbietet sich deshalb.

Um die Rüstzeiten beim Umstellen von einer Andruckvorrichtung auf eine andere zu verringern, sind deshalb bereits Druckzonen geschaffen worden, bei denen die für die jeweilige Fertigung notwendigen Druckrollensätze als vorbereitete Einheiten einsatzbereit in einer Dreheinrichtung angeordnet sind, so daß die jeweilige Einheit im Bedarfsfalle durch eine einfache Schwenk- und Drehbewegung in ihre Einsatzposition an der Werkstückkante gefahren werden kann.

Die Kapazität derartiger Dreheinrichtungen, die meist als Trommel-, Drehkreuz- oder Drehsternanordnung mit horizontaler, im wesentlichen parallel zur Durchlaufrichtung verlaufender Achse ausgebildet sind, ist jedoch begrenzt, zumal ein Druckrollensatz jeweils nur für eine bestimmte Kanten- oder Ummantelungsform eingesetzt werden kann.

Aufgabe der vorliegenden Erfindung ist es, eine Andruckvorrichtung der eingangs beschriebenen Art derart weiterzubilden, daß möglichst viele verschiedene Kantenbzw. Profilformen mit ein und derselben Andruckvorrichtung, d.h. ohne Rüstzeiten bearbeitet werden können.

Diese Aufgabe wird erfindungsgemäß dadurch gelöst, daß die Druckrollen derart gestaltet bzw. aufgehängt sind, daß sie sowohl in Andruckrichtung als auch in Achsrichtung in Grenzen gegenüber dem Trägermaterial bewegbar sind.

Die Druckrollensätze bekannter Andruckvorrichtungen wurden bisher möglichst starr ausgebildet und präzise auf den jeweiligen Einsatzzweck eingerichtet und abgestimmt. In Fachkreisen war man bisher der Auffassung, daß nur durch eine starre, dem jeweiligen Einsatzzweck genau angepaßte Anordnung ein präzises Arbeitsergebnis - und damit eine hohe Bearbeitungsqualität erzielt werden kann.

Überraschend hat sich nun gezeigt, daß durch eine erfindungsgemäße, sowohl in Andruckrichtung als auch in Achsrichtung in Grenzen bewegbare Gestaltung bzw. Aufhängung der Druckrollen, d.h. durch eine innerhalb bestimmter Grenzen flexible Anordnung mit ein und demselben Druckrollensatz ein erstaunlich großer Bereich von verschiedenen Kanten- und Profilformen ohne Qualitätseinbuße abgedeckt werden kann.

Versuche haben ergeben, daß sich bei einer derartigen flexiblen Anordnung die Druckrollen selbsttätig den jeweiligen Gegebenheiten innerhalb gewisser Grenzen anpassen und deshalb zum Teil sogar stark unterschiedliche Radien und Profilformen mit ein und derselben Druckrolleneinstellung zuverlässig angepreßt werden können.

Die flexible Befestigung der Druckrollen kann erfindungsgemäß in verschiedenster Weise realisiert werden. So können die Druckrollen von einer Schlittenanordnung gehalten sein, die jeweils in Andruckrichtung und Achsrichtung unter Federkraft verschiebbare Schlitten aufweist.

Eine vorteilhafte Druckrollenanordnung wird jedoch dadurch realisiert, daß die Druckrollen von einer Hebelanordnung gehalten sind, die jeweils in Andruckrichtung und Achsrichtung unter Federkraft verschwenkbare Hebel aufweist.

In bestimmten Anwendungsfällen werden besonders vorteilhafte Ergebnisse durch eine kombinierte Schlitten-und Hebelanordnung erzielt, deren Schlitten bzw. Hebel jeweils in Andruckrichtung und Achsrichtung unter Federkraft verschieb- bzw. verschwenkbar sind.

Eine besonders vorteilhafte flexible Befestigung der Druckrollen wird erfindungsgemäß mit einer Anordnung erreicht, bei der die Bewegung der Druckrollen in Andruckrichtung durch eine Schlittenanordnung realisiert und die Bewegungsmöglichkeit in Achsrichtung durch eine nachgiebige oder flexible Ausgestaltung der Druckrollen selbst erzielt wird. Eine solche Ausgestaltung der Druckrollen kann beispielsweise dadurch erreicht werden, daß der Mantel der Druckrollen gegenüber der Druckrollennabe in Achsrichtung aus seiner mittigen Normalstellung nach beiden Seiten in Grenzen nachgiebig auslenkbar ist. Dies kann beispielsweise durch eine spezielle Konstruktion der Druckrollen erfolgen, bei der der Umfangsbereich gegenüber dem Nabenbereich der Druckrolle federnd verschiebbar ist.

Die axiale Verschiebbarkeit kann jedoch auch unmittelbar durch das elastische Material des Mantels selbst erreicht werden, indem dessen Umfangsschicht gegenüber der Nabe oder Kernschicht nachgiebig auslenkbar ist. Besonders gute Ergebnisse werden dann erzielt, wenn das elastische Material in einem solchen Fall eine Shore-Härte zwischen 40° und 70°, vorteilhafterweise 65° aufweist.

Eine gute Anpaßbarkeit an den jeweiligen Einsatzbereich wird dann erreicht, wenn sowohl die Anpreßkraft in Andruckrichtung als auch die Verschiebekraft in Achsrichtung über einen vorgegebenen Weg konstant und unabhängig voneinander einstellbar sind.

In den meisten Fällen reicht es aus, wenn die Umfangsfläche des elastischen Mantels zylindrisch ist. Vorteilhaft ist es jedoch, wenn die Umfangsfläche des elastischen Mantels konkav gekrümmt ist, weil dadurch neben einer vorteilhaften Führungswirkung auch eine Vergrößerung der Anpreßfläche erzielt wird. Für konkav gewölbte Kanten- oder Trägermaterialformen ist es zweckmäßig, die Umfangsfläche des elastischen Mantels konvex zu krümmen.

Im folgenden sind zur weiteren Erläuterung und zum besseren Verständnis mehrere Ausführungsbeispiele der Erfindung unter Bezugnahme auf die beigefügten Zeichnungen näher beschrieben.

Fig. 1 zeigt schematisch das Anpressen von Oberflächenbeschichtungsmaterial in Form einer Kante bei einer im Durchlauf arbeitenden Softformingmaschine mittels einer erfindungsgemäßen Andruckvorrichtung, von der jedoch der Übersichtlichkeit halber nur die in Durchlaufrichtung jeweils versetzt hintereinander angeordneten, gestaffelt auf das Oberflächenmaterial einwirkenden Druckrollen mit Halterung bzw. Aufhängung dargestellt sind,

Fig. 2 zeigt in einer der Figur 1 entsprechenden Darstellung das Anpressen des überstehenden Streifens von Oberflächenbeschichtungsmaterial bei einer in Durchlaufrichtung arbeitenden Postformingmaschine,

Fig. 3 zeigt schematisch in einer perspektivischen Ansicht ein erstes Ausführungsbeispiel einer Halterung bzw. Aufhängung einer Druckrolle,

Fig. 4 zeigt schematisch in einer perspektivischen Ansicht ein zweites Ausführungsbeispiel einer Halterung bzw. Aufhängung für eine Druckrolle, und

Fig. 5 und 6 zeigen in .einer Seiten- und Vorderansicht ein drittes bevorzugtes Ausführungsbeispiel einer Halterung bzw. Aufhängung für eine Druckrolle.

Wie bereits erwähnt, sind bei den in den Figuren dargestellten Ausführungsbeispielen von der erfindungsgemäßen Andruckvorrichtung lediglich die Druckrollen mit Halterung bzw. Aufhängung dargestellt, da die übrigen Teile der Andruckvorrichtung, wie beispielsweise der Rahmen, die mit dem Rahmen verbundenen Traghebelanordnungen, an deren freien Enden jeweils die Halterung bzw. Aufhängung für die Druckrollen befestigt sind, zum bekannten Stand der Technik gehören. Im folgenden werden deshalb auch nur diejenigen Teile und Elemente beschrieben, die sich darauf beziehen, daß die Druckrollen erfindungsgemäß sowohl in Andruckrichtung als auch in Achsrichtung in Grenzen gegenüber dem Trägermaterial bewegbar bzw. verschiebbar sind.

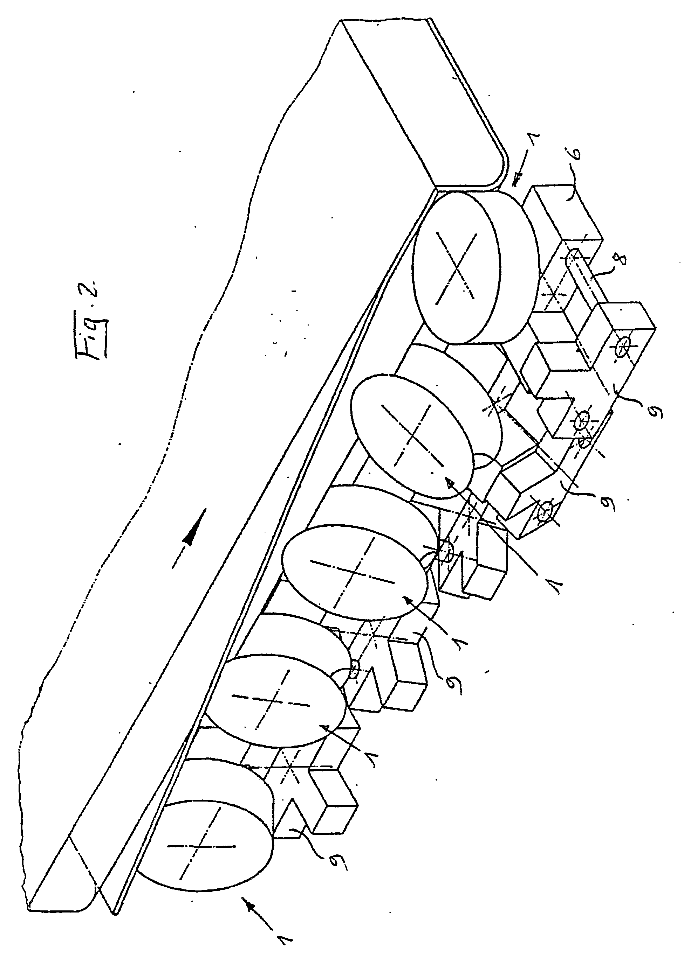

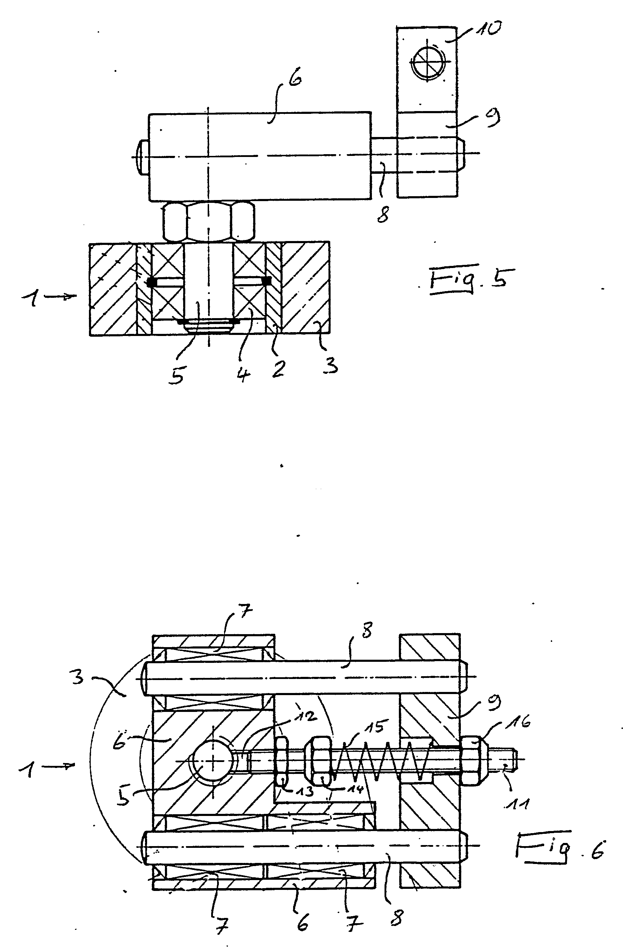

Wie aus den Fig. 5 und 6 hervorgeht, besteht die Druckrolle aus einer Nabe 2, auf deren Außenseite ein Mantel 3 aus einem elastischen Material, wie beispielsweise Silikongummi, befestigt ist. Das elastische Material des Mantels hat eine Shore-Härte zwischen 40° und 70°, vorzugsweise 65°, auf die später noch eingegangen wird. Die Umfangsfläche des Mantels ist im dargestellten Ausführungsbeispiel zylindrisch. Sie kann zur Bearbeitung von Radien konkav (vgl. mittlere Druckrollen in Fig. 2) und zur Bearbeitung von Einsenkungen konvex gestaltet sein.

Die Nabe 2 der Druckrolle 1 besitzt eine Bohrung, in der eine im vorliegenden Fall aus zwei Lagern bestehende Lageranordnung 4 angeordnet ist. Die Lageranordnung 4 sitzt auf einem Zapfen 5, der mit seinem der Druckrolle 1 abgewandten Ende fest mit einem Bock 6 verbunden ist.

Der Bock 6 besitzt - wie aus Fig. 6 hervorgeht, zu beiden Seiten des Zapfens 5 und senkrecht zu diesem verlaufende Bohrungen, in denen Geradführungen 7 für Säulen 8 befestigt sind. In diesen Geradführungen 7 sind die Säulen 8 reibungsarm hin- und herverschiebbar gelagert. An ihren Enden sind die Säulen 8 über eine Traverse 9 fest miteinander verbunden. Die Traverse 9 besitzt - wie insbesondere der Fig. 5 zu entnehmen ist - einen Ansatz 10, mit dem die beschriebene Anordnung mit der nicht dargestellten Traghebelanordnung und über diese mit dem Rahmen der Andruckvorrichtung verbunden ist.

Zwischen den Säulen 8 ist parallel zu diesen ist eine Gewindestange 11 angeordnet, die mit ihrem einen Ende in eine Gewindebohrung 12 im Bock 6 eingeschraubt und an diesem mit einer Kontermutter 13 befestigt ist. Auf der Gewindestange 11 ist neben der Kontermutter 13 eine Mutter 14 angeordnet, an der sich eine Feder 15 abstützt, die mit ihrem anderen Ende an der Traverse 9 anliegt. Die Feder 15 ist als Druckfeder ausgebildet, die bestrebt ist, den Bock 6 und damit die Druckrolle 1 von der Traverse 9 wegzudrücken. Zur Begrenzung dieser Bewegung dient eine auf der Gewindestange 11 angeordnete weitere Mutter 16.

Während durch Verstellen der Mutter 14 die Kraft der Feder 15 verändert werden kann, dient die Mutter 16 als Anschlag in Andruckrichtung.

Im beschriebenen Ausführungsbeispiel bildet der Bock 6 mit den Geradführungen 7, den Säulen 8 und der Traverse 9 einen ersten Schlitten, mit dem die Druckrolle 1 jeweils in Andruckrichtung verschiebbar ist. Die Andruckkraft in Andruckrichtung wird dabei von der Feder 15 bestimmt.

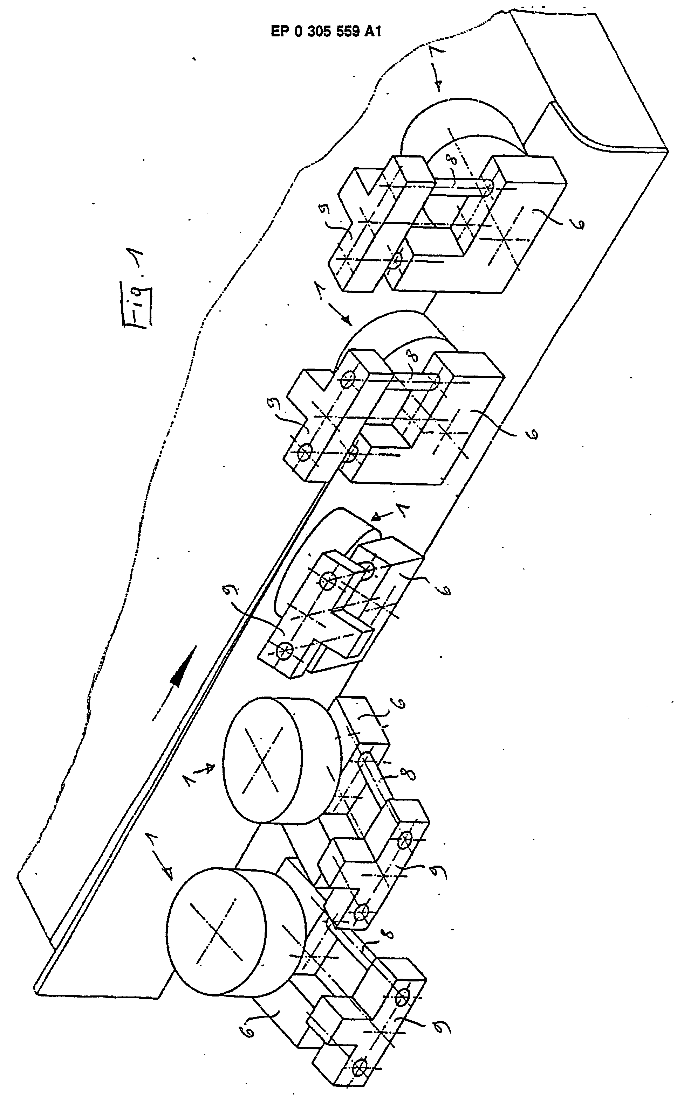

Die in den Fig. 1 bis 4 dargestellten Ausführungsbeispiele sind alle mit einem Schlitten der oben beschriebenen Art ausgestattet. Dieser Schlitten ermöglicht jedoch - wie bereits ausgeführt - lediglich eine Bewegbarkeit bzw. Verschiebbarkeit in Andruckrichtung.

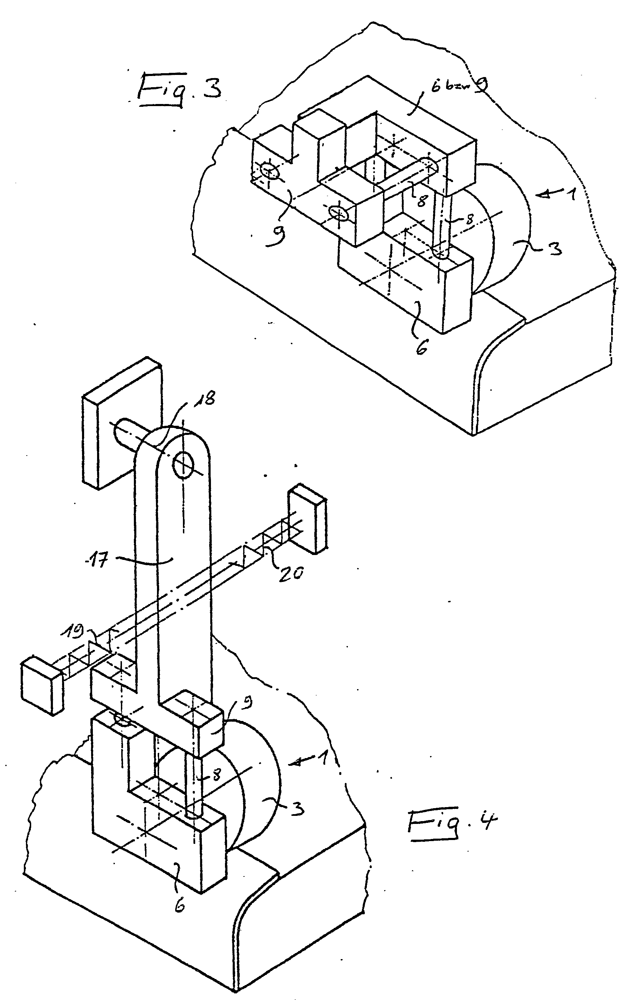

Um erfindungsgemäß die Druckrollen jedoch auch in Richtung ihrer Rotationsachse, d.h. in Achsrichtung gegenüber dem Trägermaterial bewegen bzw. verschieben zu können, ist bei dem in Fig. 3 dargestellten Ausführungsbeispiel neben dem oben beschriebenen ersten Schlitten ein senkrechter zu diesem wirkender, identisch aufgebauter zweiter Schlitten vorgesehen. Der Bock 6 dieses zweiten Schlittens bildet gleichzeitig die Traverse 9 für den ersten Schlitten, so daß beide Schlitten eine Schlittenanordnung bilden, über die die Druckrolle 1 sowohl in Andruckrichtung als auch in Achsrichtung in Grenzen gegenüber dem Trägermaterial, jeweils unter dem Einfluß einer Federkraft, bewegbar bzw. verschiebbar ist.

Bei dem in Fig. 4 dargestellten Ausführungsbeispiel wird die Bewegbarkeit bzw. Verschiebbarkeit in Achsrichtung über einen Hebel 17 erreicht, der mit seinem einen Ende mit der Traverse 9 des ersten Schlittens verbunden und mit seinem anderen Ende um eine parallel zur Durchlaufrichtung ausgerichtete Achse 18 nach Art eines Pendels hin- und herbewegbar ist. Wie in Fig. 4 angedeutet, wird der Hebel 17 in seiner Normalstellung durch zwei Federn 19 und 20 gehalten, die beide in der Schwenkebene des Hebels angeordnet sind und auf einander gegenüberliegenden Seiten auf den Hebel 17 einwirken. Der Hebel 17 kann daher im Uhrzeigersinn nur gegen die Kraft der Feder 19 und gegen den Uhrzeigersinn nur gegen die Kraft der Feder 20 ausgelenkt werden. Der erste Schlitten und der Hebel 17 stellen eine kombinierte Schlitten- und Hebelanordnung dar, mit der die Druckrolle 1 sowohl in Andruckrichtung als auch in Achsrichtung in Grenzen unter Federkraft verschieb- bzw. verschwenkbar ist.

Wie bereits erwähnt, wird bei den in den Fig. 1, 2 sowie 5 und 6 dargestellten Ausführungsbeispielen die Bewegbarkeit bzw. Verschiebbarkeit der Druckrollen 1 in Andruckrichtung durch den ersten Schlitten realisiert. Die Verschiebbarkeit der Druckrollen in Achsrichtung dagegen wird bei diesem bevorzugten Ausführungsbeispiel durch eine in Achsrichtung nachgiebige Gestaltung der Druckrollen I selbst errichtet. Dabei ist der Mantel 3 der Druckrollen gegenüber der Druckrollennabe in Achsrichtung aus seiner mittigen Normalstellung nach beiden Seiten in Grenzen nachgiebig auslenkbar. Dies wird im vorliegenden Ausführungsbeispiel durch das elastische Material des Mantels der Druckrolle selbst bewirkt, deren Umfangsschicht gegenüber der Druckrollennabe in Achsrichtung seitlich auslenkbar ist. Eine derartige nachgiebige Auslenkbarkeit in Achsrichtung ergibt sich in einfacher Weise dann, wenn das elastische Materials eine Härte zwischen 60° und 70° Shore aufweist. Besonders gute Ergebnisse werden jedoch mit einer Mantelhärte von 65° Shore erreicht.

## Ansprüche

1. Andruckvorrichtung für im Durchlauf arbeitende Kantenanleim-, Postforming- oder Ummantelungsmaschinen, zum Anpressen von Oberflächenbeschichtungsmaterial auf ein hinsichtlich der Form vorgefrästes Trägermaterial nach dem Durchfahren einer Beleimungsstation, mit einer Anzahl von in Durchlaufrichtung jeweils versetzt hintereinander angeordneten, gestaffelt auf das Oberflächenmaterial einwirkenden und dieses kontinuierlich an die vorgefräste Form des Trägermaterials anpressenden, unter Federkraft stehenden Druckrollen (1), die einen Mantel (3) aus elastischem Material aufweisen,

dadurch gekennzeichnet, daß die Druckrollen (1) derart gestaltet bzw. aufgehängt sind, daß sie sowohl in Andruckrichtung als auch in Achsrichtung in Grenzen gegenüber dem Trägermaterial bewegbar sind.

2. Andruckvorrichtung nach Anspruch 1, dadurch gekennzeichnet, daß die Druckrollen (1) von einer Schlittenanordnung gehalten sind, die jeweils in Andruckrichtung und Achsrichtung unter Federkraft verschiebbare Schlitten aufweist.

3. Andruckvorrichtung nach Anspruch 1, dadurch gekennzeichnet, daß die Druckrollen (2) von einer Hebelanordnung gehalten sind, die jeweils in Andruckrichtung und Achsrichtung unter Federkraft verschwenkbare Hebel aufweist.

4. Andruckvorrichtung nach Anspruch 1, dadurch gekennzeichnet, daß die Druckrollen (1) von einer kombinierten Schlitten- und Hebelanordnung gehalten sind, deren Schlitten (6, 8, 9) bzw. Hebel (17) jeweils in Andruckrichtung und Achsrichtung unter Federkraft verschieb- bzw. verschwenkbar sind.

5. Andruckvorrichtung nach Anspruch 1, dadurch gekennzeichnet, daß die Druckrollen (1) in Achsrichtung nachgiebig gestaltet und von einem in Andruckrichtung unter Federkraft verschiebbaren Schlitten gehalten sind.

6. Andruckvorrichtung nach Anspruch 5, dadurch gekennzeichnet, daß der Mantel (3) der Druckrollen gegenüber der Druckrollennabe (2) in Achsrichtung aus seiner mittigen Normalstellung nach beiden Seiten in Grenzen nachgiebig auslenkbar ist.

7. Andruckvorrichtung nach Anspruch 6, dadurch gekennzeichnet, daß der Mantel (3) aus einem elastischen Material besteht, dessen Umfangsschicht gegenüber der Druckrollennabe (2) nachgiebig auslenkbar ist.

8. Andruckvorrichtung nach einem oder mehreren der Ansprüche 1 bis 7, dadurch gekennzeichnet, daß das elastische Material des Mantels (3) eine Härte zwischen 40° und 70° shore aufweist.

9. Andruckvorrichtung nach einem oder mehreren der Ansprüche 1 bis 7, dadurch gekennzeichnet, daß das elastische Material des Mantels (3) eine Härte von 65° shore aufweist.

10. Andruckvorrichtung nach einem oder mehreren der vorhergehenden Ansprüche, dadurch gekennzeichnet, daß die Anpreßkraft in Andruckrichtung und die Verschiebekraft in Achsrichtung über einen vorgegebenen Wert konstant und unabhängig voneinander einstellbar sind.

11. Andruckvorrichtung nach einem oder mehreren der vorhergehenden Ansprüche, dadurch gekennzeichnet, daß die Umfangsfläche des elastischen Mantels (3) zylindrisch ist.

12. Andruckvorrichtung nach einem oder mehreren der vorhergehenden Ansprüche, dadurch gekennzeichnet, daß die Umfangsfläche des elastischen Mantels (3) konkav gekrümmt ist.

13. Andruckvorrichtung nach einem oder mehreren der vorhergehenden Ansprüche, dadurch gekennzeichnet, daß die Umfangsfläche des elastischen Mantels (3) konvex gekrümmt ist.

Fig. 1

Fig. 2

EP 0 305 559 A1

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 462 437 (WERNLE HOLZBAU) * Figuren 18-20; Spalte 7, Zeilen 9-30 * --- | 1-13 | B 29 C 63/04 B 27 D 5/00 |
| X | DE-A-2 952 012 (IMA-KLESSMAN) * Figuren * --- | 1-13 | |
| X A | US-A-3 607 533 (MOORE) * Figuren * --- | 1,6-9, 11 3 | |
| X | GB-A-1 058 833 (SINGER-COBBLE) * Figuren; Ansprüche * --- | 1,6-9, 11 | |
| X | US-A-3 698 989 (VOORHEES) * Figuren 10-13 * --- | 1,6-9, 11 | |
| X | FR-A-2 485 068 (ALBIAC) * Figuren; Seite 6, Zeilen 14-21 * --- | 1 | |
| X | DE-A-2 947 641 (R. DÜSPOHL) * Figuren; Anspruch 12 * --- | 1,6-9, 11 | **RECHERCHIERTE SACHGEBIETE (Int. Cl.4)** |
| X | NL-A-6 618 471 (C.F. ROSER) * Figuren; Seite 1, Zeilen 11-14; Seite 6, Zeilen 21-28; Seite 8, Zeilen 7-12 * --- | 1,6-9, 11 | B 29 C B 27 D |
| X A | US-A-3 375 152 (LUNDBERG) * Figuren; Spalte 2, Zeilen 27-35 * --- | 1 3 | |
| A | FR-A-1 420 142 (GOODYEAR TIRE) * Figuren * --- -/- | 3 | |

Der vorliegende Recherchenbericht wurde für alle Patentansprüche erstellt

| Recherchenort | Abschlußdatum der Recherche | Prüfer |
|---|---|---|
| DEN HAAG | 26-05-1988 | CORDENIER J. |

EPO FORM 1503 03.82 (P0403)

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 357 051 (IMA-KLESSMANN) <br> * Figuren * <br> --- | 11-13 | |
| A | DE-A-3 119 268 (HORNBERGER) <br> * Figuren * <br> --- | 1 | |
| A | DE-A-2 346 110 (HEMAG MASCHINENBAU) <br> * Figur 2 * <br> ----- | 3 | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 26-05-1988 | CORDENIER J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument